Europäisches Patentamt

European Patent Office

Office européen des brevets

(19)

(11) Numéro de publication: **0 042 784**
**B1**

(12) # FASCICULE DE BREVET EUROPEEN

(45) Date de publication du fascicule du brevet:
14.03.84

(51) Int. Cl.³: **B 64 G 1/42**, F 17 C 13/00,
F 02 K 9/60

(21) Numéro de dépôt: **81400944.5**

(22) Date de dépôt: **15.06.81**

(54) Réservoir à tension superficielle.

(30) Priorité: **20.06.80 FR 8013811**

(43) Date de publication de la demande:
**30.12.81 Bulletin 81/52**

(45) Mention de la délivrance du brevet:
**14.03.84 Bulletin 84/11**

(84) Etats contractants désignés:
**BE DE GB IT NL**

(56) Documents cités:
**FR - A - 1 444 982**
**FR - A - 2 254 494**
**FR - A - 2 372 642**
**US - A - 3 486 302**

**JOURNAL OF SPACECRAFT AND ROCKETS, vol. 8, no. 2, février 1971 S.C. DE BOCK et al.: "A survey of current developments in surface tension devices for propellant Acquisition", pages 83-98**

(73) Titulaire: **SOCIETE EUROPEENNE DE PROPULSION Société Anonyme dite, 3, avenue du Général de Gaulle, F-92800 Puteaux (FR)**

(72) Inventeur: **Michel, Jean Robert, 7, allée de l'Ivraie, Montigny le Bretonneux F-78190 Trappes (FR)**

(74) Mandataire: **Joly, Jean Jacques et al, CABINET BEAU DE LOMENIE 55, rue d'Amsterdam, F-75008 Paris (FR)**

BUNDESDRUCKEREI BERLIN

## Réservoir à tension superficielle

La présente invention concerne un réservoir à tension superficielle du type connu comportant une enveloppe, un orifice de sortie de liquide formé dans une paroi de l'enveloppe et à travers lequel du liquide contenu dans le réservoir peut être expulsé sous l'effet de gaz de pressurisation, un dispositif collecteur de liquide s'étendant dans l'enveloppe et aboutissant à une chambre disposée à proximité de l'orifice de sortie et communiquant avec celui-ci à travers au moins une barrière de gaz de sortie.

Un tel réservoir pressurisé est plus particulièrement destiné à être utilisé à bord de satellites ou de plates-formes stabilisées trois-axes pour le stockage d'ergols liquides qui alimentent, en cas de besoin, des moteurs servant notamment aux opérations de contrôle d'orbite lors de la vie du satellite.

Pour des satellites stabilisés trois-axes, il n'existe pas de direction privilégiée de l'accélération ambiante. Aussi, l'ergol peut se trouver en un endroit quelconque du réservoir tout en restant en contact avec la paroi. Un premier problème qui se pose est alors d'établir dans tous les cas une continuité liquide entre la paroi du réservoir et la sortie de celui-ci. Plusieurs solutions à ce problème on déjà été proposées, en particulier l'utilisation de dispositifs utilisant les phénomènes capillaires, dispositifs que l'on désigne ici sous le terme de dispositifs collecteurs de liquide.

Un dispositif collecteur particulier connu consiste en plusieurs canaux qui sont disposés le long de la surface interne du réservoir, à faible distance de cette surface, et qui ont au moins la paroi tournée vers cette surface réalisée en un matériau poreux tel qu'une toile métallique. Les canaux amènent le liquide vers la sortie et les toiles métalliques permettent le passage du liquide tout en s'opposant au passage du gaz de pressurisation graâce à leur propriété dite de barrière de gaz. En effet, lorsqu'une toile métallique est mouillée et tant que la différence des pressions qui s'exercent de part et d'autre de la toile n'excède pas la valeur limite (point de bulle) pour laquelle sont rompus les ménisques d'interface gaz-liquide situés entre les mailles de la toile, la toile s'oppose au passage de bulles de gaz à l'intérieur des canaux. De telles bulles, si elles étaient expulsées hors du réservoir perturberaient le fonctionnement des dispositifs utilisant le liquide stocké dans le réservoir.

Le fonctionnement des barrières de gaz ne pose pas de problème lorsque le satellite est en orbite. En effet, l'accélération ambiante est normalement nulle ou quasi-nulle et l'utilisation des moteurs lors de phase de contrôle d'attitude et d'orbite n'engendre que des accéléations d'amplitude relativement faible et ce pendant des durées limitées. Les mailles de la barrière de gaz peuvent alors être facilement dimensionnées, compte-tenu de la tension superficielle du liquide stocké, pour que le point de bulle reste largement supérieur à la pression différentielle que s'exerce sur la barrière de gaz en raison de ces accélérations limitées.

Il n'en va pas même lors de la phase de lancement du satellite et de celle du transfert sur orbite avec stabilisation par spin. En effet, le satellite est alors soumis à de fortes accélérations. Du gaz peut pénêtrer dans les canaux et s'y trouver emprisonné lorsque, le satellite étant en orbite, les parois poreuses des canaux ont retrouvé leur fonction de barrières de gaz. Le gaz est amené petit à petit vers la sortie et risque d'être expulsé à travers celle-ci avant que le liquide stocké ait été utilisé dans sa plus grande partie. Il a bien été proposé de munir l'orifice de sortie du réservoir d'une barrière de gaz, mais il peut se produire une configuration pour laquelle cette barrière est totalement couverte par du gaz ayant pénétré dans les canaux collecteurs, et ce avant utilisation du liquide stocké.

Un premier object de l'invention est donc de fournir un réservoir dans lequel du gaz ayant pu pénétrer dans le dispositif collecteur avant le début de la vidange du réservoir ne risque pas d'être expulsé hors de réservoir tant qu'il reste une quantité substantielle de liquide dans le réservoir.

D'autres problèmes relatifs aux réservoir à tension superficielle pour satelllites sont rencontrés au moment du remplissage du réservoir. En effet, ce remplissage est effectué généralement alors que le réservoir est monté dans le satellite. Il importe de remplir le réservoir sans laisser de poches de gaz au moins dans le dispositif collecteur et à proximité de la sortie et ceci doit être réalisé sans bouger le réservoir, en toute sécurité et sans nécessiter d'opérations longues et compliquées- Aussi, l'invention a encore pour objet de fournir un réservoir qui satisfasse ces conditions.

Ces objets sont atteints par un réservoir du type défini en tête de la description et comportant en outre, conformément à l'invention:

— un dispositif tubulaire situé dans l'enveloppe, ayant une première partie renflée formant la chambre disposée à proximité de l'orifice et où aboutit le dispositif collecteur, et une deuxième partie de plus petite section transversale, formant conduit que s'ouvre à une première extrémité dans une zone de fond de la chambre opposée à celle située du côté de l'orifice de sortie et qui a une deuxième extrémité située à un niveau du réservoir plus éloigné de l'orifice de sortie que sa première extrémité, et

— des cloisons formant barrières de gaz pour séparer le dispositif collecteur de la chambre à leur raccordement et pour séparer la deuxième extrémité du conduit du volume interne du réservoir.

Les cloisons séparant le dispositif collecteur de la chambre du dispositif tubulaire empêchent le gaz ayant pu pénétrer accidentellement dans le dispositif collecteur de parvenir dans la chambre, initialement pleine de liquide, avant que la vidange du réservoir commence. Au fur et à mesure que du liquide est soutiré du réservoir au cours de la mission du satellite, ce gaz peut pénétrer dans la chambre où il reste emprisonné grâce à la présence de la barrière de gaz de sortie et tant que celle-ci est mouillée. L'expulsion de gaz hors du réservoir est donc retardée au maximum.

De préférence, le dispositif collecteur est formé de plusieurs canaux qui s'étendent le long et à distance relativement faible de la surface interne de l'enveloppe et dont au moins la paroi faisant face à cette surface interne est poreuse et le volume libre de la chambre du dispositif tubulaire est au moins égal au volume qu'occuperait en fin de vidange du réservoir une quantité de gaz dont le volume aurait été égal à celui des canaux avant le début de la vidange. Ainsi, le fonctionnement du réservoir n'est pas affecté même dans le cas limite pour lequel tous les canaux seraient pleins de gaz au début de la mission du satellite.

Le conduit tubulaire qui s'ouvre au fond de la chambre constitue un conduit de purge permettant de remplir le réservoir par son orifice de sortie et d'assurer ainsi qu'après remplissage, la chambre sera pleine de liquide.

La seconde extrémité du conduit de purge peut aboutir à l'intérieur du réservoir en étant obturée par une cloison formant barrière de gaz. Lorsque le dispositif tubulaire est avantageusement raccordé à un des canaux qui constitue alors un prolongement du conduit de purge, le dispositif tubulaire conservant alors des dimensions minimales.

Un avantage particulier du réservoir conforme à l'invention réside dans le fait que la »masse morte« du réservoir est réduite au minimum. La masse morte comprend une première composante qui est constituée par la masse du réservoir vide et une deuxième composante qui est constituée par la masse de liquide restant dans le réservoir au moment où les premières bulles de gaz de pressurisation sont expulsées hors du réservoir. La première composante n'est pas affectée de façon très sensible par la présence du dispositif tubulaire. La seconde composante est réduite du fait que le gaz est retenu dans la chambre tant que du liquide y est amené en quantité suffisante pour mouiller la barrière de gaz de sortie. Cette seconde composante peut encore être minimisée en disposant dans la chambre un dispositif collecteur supplémentaire qui communique, d'une part, directement avec l'orifice de sortie, et, d'autre part, avec le volume libre de la chambre à travers la barrière de gaz de sortie.

D'autres particularités et avantages du réservoir conforme à l'invention ressortiront à la lecture de la description faite ci-après, à titre indicatif, mais non limitatif, en référence aux dessins joints sur lesquels:

— la figure 1 est une vue schématique en coupe méridienne d'un mode de réalisation d'un réservoir conforme à l'invention, et,

— la figure 2 est une vue de détail en coupe méridienne et à échelle agrandie d'une partie du réservoir illustré par la figure 1.

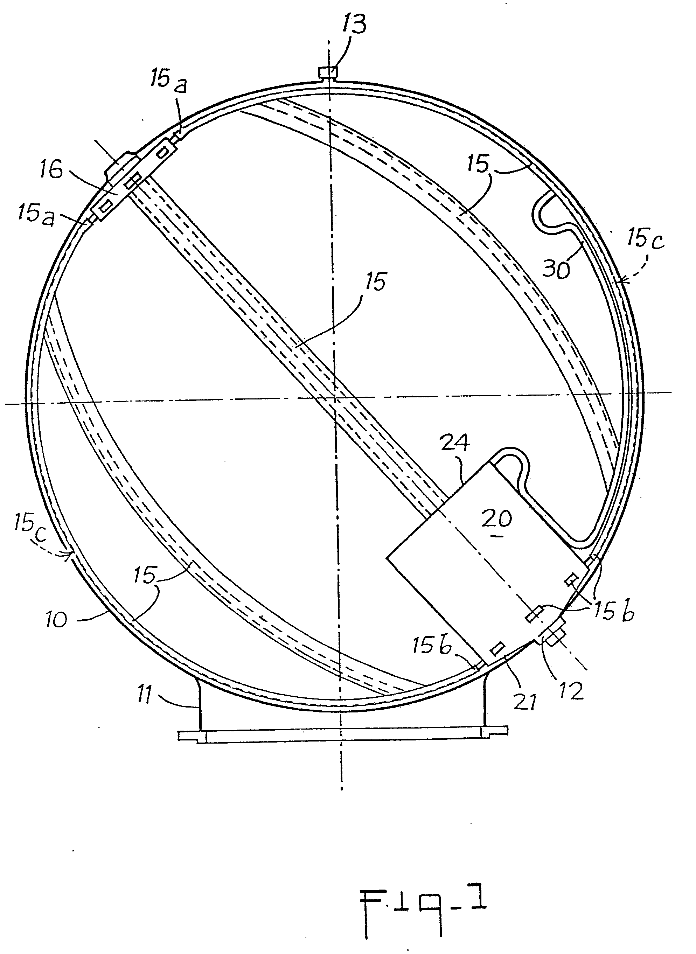

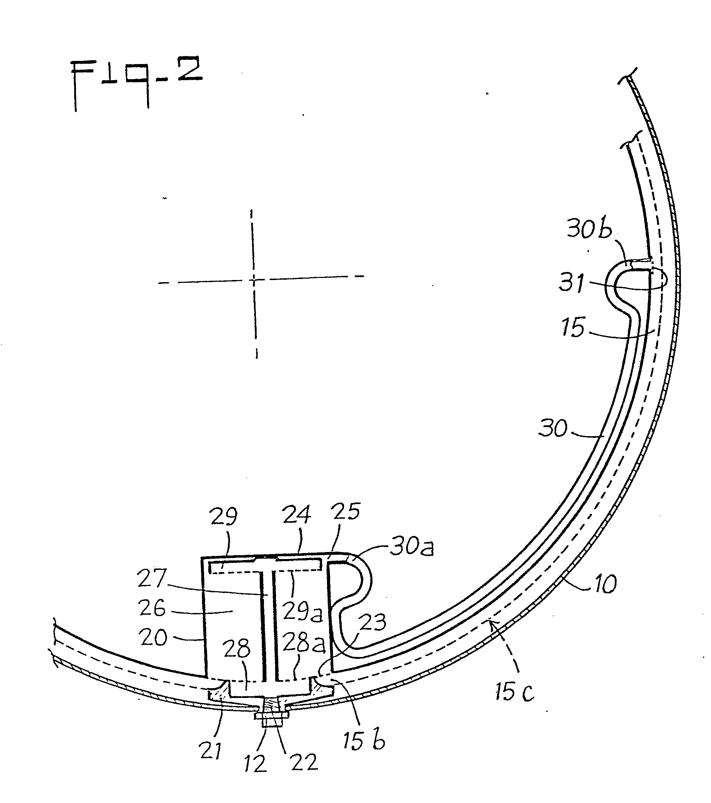

Le réservoir illustré par les figures 1 et 2, est par exemple destiné au stockage d'ergols dans un satellite. Il est réalisé entièrement en éléments métalliques.

Ce réservoir comporte une enveloppe sphérique 10 soudée sur un support annulaire 11 servant à la figure du réservoir. Dans la paroi du réservoir sont formés un orifice de sortie de liquide 12, et un orifice 13 qui est situé au sommet du réservoir lorsque ce dernier est monté au sol. L'orifice 13 constitue l'orifice de purge au remplissage et l'orifice d'introduction de gaz de pressurisation pour la vidange.

L'orifice de sortie 12 est disposé à proximité de l'embase 11 et est raccordé par des tubulures (non représentées) à un ou plusieurs moteurs.

Un dispositif collecteur de liquide formé de canaux 15 est disposé à l'intérieur de l'enveloppe 10. Les canaux sont interconnectés au moyen d'un boîtier circulaire 16 à une première extrémité 15a située au voisinage de la zone de l'enveloppe opposée à celle munie de l'orifice 12. A partir de leur extrémité 15a, les canaux 15 s'étendent le long de plans méridiens jusqu'à leur extrémité 15b au voisinage de l'orifice de sortie 12. Les canaux 15 sont disposés le long de la paroi interne de l'enveloppe 10 en étant faiblement espacés de celle-ci. Dans l'exemple illustré, les canaux sont tous identiques, répartis angulairement de façon régulière et ont une section transversale droite de forme rectangulaire. La paroi 15c des canaux 15 faisant face à la surface interne de l'enveloppe 10 est poreuse, par exemple formée par une toile métallique ou une tôle perforée. Les autres parois des canaux sont pleines.

A leurs extrémités 15b, les canaux 15 aboutissent à une chambre cylindrique 20 d'un dispositif tubulaire comportant en outre un conduit 30 raccordé à la chambre 20.

Comme on peut le voir plus clairement sur la figure 2, la chambre 20 est de forme cylindrique de même axe que l'orifice de sortie. La chambre 20 a une paroi d'extrémité 21 située à proximité immédiate de la zone de la surface interne de l'enveloppe entourant l'orifice 12. Une ouverture centrale 22 est formée dans la paroi 21 et est raccordée directement à l'orifice 12. Le fond de la chambre 20 est fermé par une paroi d'extrémité 24 opposée à la paroi 21.

Les canaux 15 sont raccordés à la chambre 20 par des ouvertures formées dans la paroi latérale de cette chambre à proximité de la paroi d'extrémité 21. Le volume interne libre 26 de la chambre 20 est séparé de l'intérieur des canaux 15 par des barrières de gaz 23 constituées par des toiles métalliques ou tôles perforées.

Le conduit 30 aboutit à une extrémité 30a dans la chambre 20 à travers une ouverture 25 formée dans la paroi de fond 24 ou, comme dans l'exemple illustré, à proximité immédiate de celle-ci. A l'autre extrémité 30b, le conduit 30 est raccordé à une ouverture formée dans une paroi d'un des canaux 15, cette ouverture étant munie d'une barrière de gaz 31 analogue aux barrières 23. L'extrémité 30b se trouve à un niveau du réservoir plus élevé que l'extrémité 30a dans la position de remplissage illustrée par la figure 1.

Un tube axial 27 est disposé à l'intérieur de la chambre 20 et s'ouvre à ses extrémités dans des compartiments circulaires 28, 29 situés à proximité des parois 21 et 24 de la chambre 20 et s'étendant en regard de la plus grande partie de la surface interne de ces parois. Le compartiment 28 communique directement avec l'ouverture 22. La communication entre les compartiments 28, 29 et le volume interne 26 de la chambre 20 se fait à travers les parois 28a, 29a en regard des compartiments 28, 29, ces parois étant poreuses et constituant la barrière de gaz de sortie du réservoir. Dans l'exemple illustré, les parois 28a et 29a sont des toiles métalliques radiales reliant les extrémités du tube 27 à la périphérie des compartiments 28, 29.

L'introduction de gaz de pressurisation dans l'enveloppe est effectuée par l'orifice 13. A cette fin, une tubulure (non représentée) reliée à une source de gaz sous pression peut être raccordée à l'orifice 13 après remplissage du réservoir. Le gaz de pressurisation peut être introduit définitivement à l'intérieur du réservoir lorsque celui-ci est au sol, ou bien être introduit en permanence à partir d'une réserve située à l'extérieur de l'enveloppe.

Le fonctionnement du réservoir décrit ci-dessus est le suivant.

Le réservoir étant monté dans le satellite et se trouvant dans la position illustrée par la figure 1, le liquide est introduit à travers l'orifice de sortie 12 tandis que l'orifice de purge 13 est ouvert. Le liquide pénètre dans la chambre 20, et de là, dans les canaux 15 et le conduit de purge 30. L'air est chassé progressivement et ce mode de remplissage d'éviter que des poches d'air restent emprisonnées dans la chambre 20, les canaux 15 et le conduit 30 du fait de la présence des barrières de gaz.

Une fois que la quantité voulue de liquide a été introduite, le réservoir est pressurisé.

Pendant les phases du lancement allant jusqu'à la stabilisation en orbite, les accélérations appliquées au satellite sont susceptibles de pro-voquer la pénétration de gaz de pressurisation dans les canaux 15. Toutefois, ce gaz ne peut pénêtrer dans le dispositif tubulaire plein de liquide et protégé par les barrières de gaz. Lorsque le satellite est stabilisé en orbite, les parois 15c des canaux 15 retrouvent leur fonction de barrières de gaz. De ce fait, le gaz ayant éventuellement pénétré dans les canaux y reste prisionnier.

Au cours de la mission du satellite, le liquide est extrait du réservoir à chaque fois que cela est nécessaire. La quantité de liquide contenu dans le réservoir diminue de même que la pression du gaz de pressurisation. Si du gaz prisonnier dans les canaux 15 vient à recouvrir entièrement les barrières de gaz 23 séparant les canaux 15 de la chambre 20, ce gaz peut pénétrer dans la chambre. Ainsi, le gaz prisonnier peut s'accumuler petit à petit dans le volume interne 26 de la chambre 20 et y reste tant qu'il subsiste dans la chambre suffisamment de liquide pour mouiller la barrière de gaz de sortie. Le cas le plus défavorable que l'on puisse rencontrer est celui dans lequel les canaux 15 sont pleins de gaz un moment où la vidange du réservoir commence, à la pression maximale du gaz de pressurisation. Pour ne pas affecteur le fonctionnement du réservoir jusqu'à la fin de la vidange, on confère alors au volume libre de la chambre 20 une valeur supérieure à celle du volume qu'occuperait ce gaz en fin de vidange, c'est-à-dire lorsque la pression du gaz de pressurisation atteint sa valeur minimale.

En apesanteur, le liquide contenu dans le réservoir peut se trouver en n'importe quel endroit à l'intérieur de l'enveloppe 10 tout en restant au contact de celle-ci. La continuité liquide entre la paroi interne de l'enveloppe et la chambre 20 est assurée par les canaux. Au fur et à mesure que diminue la quantité de liquide contenue dans le réservoir à l'extérieur des canaux et du dispositif tubulaire, il se forme des filets capillaires de plus en plus étroits entre les canaux et la paroi interne de l'enveloppe jusqu'à être réduits à l'espace entre les parois poreuses 15c et la surface intérieure de l'enveloppe. Ensuite, les parois 15c ne sont mouillées et perdent leur propriété de barrières de gaz. S'il reste encore du liquide contre la paroi interne de l'enveloppe, ce liquide ne pourra pas être utilisé et fait partie de la »masse morte« du réservoir. La quantité de liquide éventuellement restant peut être minimisée en choisissant un nombre assez grand de canaux. Il ne faut toutefois pas que l'augmentation du nombre des canaux se traduise par un accroissement de la masse propre du réservoir d'une quantité supérieure à l'économie escomptée sur la masse morte de liquide. En outre, plus le volume des canaux est grand et plus on est amené à augmenter les dimensions de la chambre 20 pour les raisons indiquées au paragraphe précédent. Dans l'exemple illustré, le nombre de canaux est égal à 8.

Lorsque le gaz a pénétré dans les canaux vers la fin de la vidange, ceux-ci se vident au cours de la ou des phases d'utilisation de liquide qui suivent.

La dernière partie de la vidange du réservoir consiste dans la ou les phases d'extraction du liquide contenu dans le volume 26 de la chambre 20. Les compartiments 28 et 29, avec leurs parois poreuses 28a et 29a se comportent comme des collecteurs de liquide établissant la continuité liquide entre les parois opposées de la chambre 20 et le passage de sortie 22. La vidange est considérée comme terminée lorsque du gaz franchit la barrière de gaz de sortie 28a—29a. La masse morte de liquide contenue dans la chambre 20 peut être minimisée en disposant dans cette chambre un dispositif collecteur pouvant aussi atteindre le liquide dans des zones de la paroi latérale de la chambre.

Dans le réservoir décrit ci-dessus, le conduit de purge 30 aboutit dans un canal 15. En variante, le tube 30 pourra se terminer à son extrémité 30b, à l'intérieur de l'enveloppe, par une cloison formant barrière de gaz. Il est également envisageable de raccorder l'extrémité 30b du conduit de purge au boîtier 16.

## Revendications

1. Réservoir à tension superficielle comportant une enveloppe (10), un orifice de sortie (12) de liquide formé dans une paroi de l'enveloppe (10) et à travers lequel du liquide contenu dans le réservoir peut être expulsé sous l'effet de gaz de pressurisation, un dispositif collecteur (15) de liquide s'étendant dans l'enveloppe et aboutissant à une chambre (20) disposée à proximité de l'orifice de sortie (12) et communiquant avec celui-ci à travers au moins une barrière de gaz de sortie (28a, 29a), réservoir caractérisé en ce qu'il comporte:

— un dispositif tubulaire situé dans l'enveloppe, ayant une première partie renflée formant ladite chambre (20) disposée à proximité de l'orifice de sortie (12), et une deuxième partie (30) de plus petite section transversale, formant conduit qui s'ouvre à une première extrémité (30a) dans une zone de fond de la chambre (20) opposée à celle située du côté de l'orifice de sortie (12) et qui a une deuxième extrémité (30b) située au-dessus de sa première extrémité (30a) quand le réservoir est en position de remplissage, et
— des cloisons (23, 31) formant barrières de gaz pour séparer le dispositif collecteur (15) de la chambre (20) à leur raccordement et pour séparer la deuxième extrémité du conduit (30) du volume interne du réservoir.

2. Réservoir selon la revendication 1, dans lequel le dispositif collecteur est formé de plusieurs canaux (15) qui s'étendent le long et à distance relativement faible de la surface interne de l'enveloppe et dont au moins la paroi (15c) faisant face à cette surface interne est poreuse, caractérisé en ce que le volume libre de la chambre (20) du dispositif tubulaire est au moins égal au volume qu'occuperait en fin de vidange du réservoir une quantité de gaz dont le volume aurait été égal à celui des canaux (15) avant le début de la vidange.

3 Réservoir selon la revendication 2, caractérisé en ce que le conduit (30) du dispositif tubulaire est connecté à un des canaux (15) à sa deuxième extrémité (30b).

4. Réservoir selon la revendication 3, caractérisé en ce qu'une barriière de gaz (31) est disposée au raccordement entre ledit conduit (30) et le canal (15) auquel il est connecté.

5. Réservoir selon l'une quelconque des revendications 1 à 4, caractérisé en ce que la chambre (20) présente un forme cylindrique d'axe confondu avec celui de l'orifice de sortie (21).

6. Réservoir selon l'une quelconque des revendications 1 à 5, caractérisé en ce que la chambre (20) du dispositif tubulaire renferme un dispositif collecteur de liquide supplémentaire qui communique, d'une part, directement avec l'orifice de sortie (12) et, d'autre part, avec le volume libre de la chambre à travers ladite barrière de gaz de sortie (28a, 29a).

7. Réservoir selon la revendiaction 6, caractérisé en ce que la chambre est cylindrique et et renferme un tube axial (27) aligné avec l'orifice de sortie (12) et s'ouvrant à ses extrémités dans deux compartiments (28, 29) situés à proximité des parois d'extrémité de la chambre et dont la paroi est au moins en partie poreuse.

## Patentansprüche

1. Oberflächenspannungsbehälter mit einem Mantel (10), einer in einer Wand des Mantels (10) gebildeten Flüssigkeitsaustrittsöffnung (12), durch welche im Behälter enthaltene Flüssigkeit unter der Wirkung von Druckgas austreibbar ist, einer sich über den Mantel erstreckenden und zu einer Kammer (20) führenden Flüssigkeitssammeleinrichtung (15), welche Kammer in der Nähe der Austrittsöffnung (12) angeordnet ist und über zumindest eine Gasaustrittssperre (28a, 29a) mit derselben in Verbindung steht, welcher Behälter dadurch gekennzeichnet ist, daß er folgendes umfaßt:

— eine im Mantel angeordnete rohrförmige Einrichtung mit einem ersten, die Kammer (20) bildenden und in der Nähe der Austrittsöffnung (12) angeordneten bauchigen Teil und einem zweiten Teil (30) von geringerem Querschnitt, der eine Leitung bildet, welche sich an einem ersten Ende (30a) in einer jener auf der Seite der Austrittsöffnung (12) gegenüberliegenden Bodenzone der Kammer (20) öffnet und welche ein zweites Ende (30b) besitzt, das über ihrem ersten Ende (30a) liegt, wenn sich der Behälter in Füllstellung befindet, und
— Gassperren bildende Trennwände (23, 31) zur Abtrennung der Sammeleinrichtung (15) von der Kammer (20) an ihrem Übergang und zur Abtrennung des zweiten Endes der Leitung (30) vom Innenraum des Behälters.

2. Behälter nach Anspruch 1, bei welchem die Sammeleinrichtung durch mehrere Kanäle (15) gebildet ist, die sich der Länge nach und in einem relativ geringem Abstand von der Innenfläche des Mantels erstrecken und von denen zumindest die dieser Innenfläche gegenüberliegende Wand (15c) porös ist, dadurch gekennzeichnet, daß das freie Volumen der Kammer (20) der rohrförmigen Einrichtung zumindest gleich dem Volumen ist, das am Ende des Entleerens des Behälters von einer Gasmenge eingenommen wird, deren Volumen gleich jenem der Kanäle (15) vor Beginn des Entleerens ist.

3. Behälter nach Anspruch 2, dadurch gekennzeichnet, daß die Leitung (30) der rohrförmigen Einrichtung an ihrem Ende (30b) mit einem der Kanäle (15) verbunden ist.

4. Behälter nach Anspruch 3, dadurch gekennzeichnet, daß eine Gassperre (31) am Übergang zwischen der Leitung (30) und dem mit ihr verbundenen Kanal (15) angeordnet ist.

5. Behälter nach einem der Ansprüche 1 bis 4, dadurch gekennzeichnet, daß die Kammer (20) zylindrische Form aufweist, wobei die Achse mit jener der Austrittsöffnung (12) zusammenfällt.

6. Behälter nach einem der Ansprüche 1 bis 5, dadurch gekennzeichnet, daß die Kammer (20) der rohrförmigen Einrichtung eine zusätzliche Flüssigkeitssammeleinrichtung umfaßt, die einerseits direkt mit der Austrittsöffnung (12) und andererseits über die Gasaustrittssperre (28a, 29a) mit dem freien Volumen der Kammer verbunden ist.

7. Behälter nach Anspruch 6, dadurch gekennzeichnet, daß die Kammer zylindrisch ist und ein mit der Austrittsöffnung (12) fluchtendes axiales Rohr (27) umschließt, welches an seinen Enden in zwei Abteile (28, 29) mündet, die in der Nähe der Endwände der Kammer angeordnet sind und deren Wand zumindest teilweise porös ist.

## Claims

1. Surface tension storage tank comprising an enclosure (10), a liquid outlet (12) provided in a wall of the enclosure (10) and through which the liquid contained in the storage tank can be expelled under the action of a pressurant gas, a liquid collecting device (15) extending into the enclosure and reaching a chamber (20) situated close to the said outlet (12) and communicating therewith via at least an outlet gas barrier (28a, 29b), characterized in that it comprises:

— a tubular device situated inside the enclosure, and provided with a first swollen part forming the chamber (20) situated close to the outlet (12), and a second part (30) of smaller cross-section, forming a conduit issuing at a first end (30a) into a bottom area of the chamber (20) opposite that situated on the outlet (12) side and which has as second end (30b) when the tank is in the filling position, and

— walls (23, 31) forming gas barriers to separate the collecting device (15) from the chamber (20) at their connecting point and to separate the second end of the conduit (30) from the internal volume of the tank.

2. Storage tank according to claim 1, in which the collecting device is composed of a plurality of channels (15) which extend along the internal surface of the enclosure and at a relatively small distance therefrom, and of which at least the wall (15c) facing the said internal surface is porous, characterized in that the free volume of the chamber (20) of the tubular device is at least equal to the volume occupied after draining by a quantity of gas whose volume would have been equal to that of the channels (15) before the draining started.

3. Storage tank according to claim 2, characterized in that the conduit (30) of the tubular device is connected by its second end (30b) to one of the channels (15).

4. Storage tank according to claim 3, characterized in that a gas barrier (31) is placed at the junction between said conduit (30) and the channel (15) to which it is connected.

5. Storage tank according to any one of claims 1 to 4, characterized in that the said chamber (20) is cylindrical and has the same axis as the liquid expelling orifice (21).

6. Storage tank according to any one of claims 1 to 5, characterized in that the said chamber (20) of the tubular device contains an extra liquid-collector device which communicates, on the one hand, directly with the outlet (12) and, on the other hand, with the free volume of the chamber through the said outlet gas barrier (28a, 29a).

7. Storage tank according to claim 6, characterized in that the said chamber is cylindrical and contains an axial tube (27) aligned with the outlet (12) and opening at its end into two compartments (28, 29) situated close to the end walls of the chamber and the wall of which is at least partly porous.

F i g - 1

# Fig. 2